# EUROPÄISCHE PATENTSCHRIFT

(11) **EP 3 075 790 B1**
(45) Veröffentlichungstag und Bekanntmachung des Hinweises auf die Patenterteilung: **18.07.2018**
(21) Anmeldenummer: 15193306.6
(22) Anmeldetag: 05.11.2015
(51) Int. Cl.: C09D 5/28, G09F 13/16, C09D 5/33, C09D 7/00

(54) **SCHUTZLACKIERUNG MIT ANTIAUFKLEBEREFFEKT SOWIE VERFAHREN ZUM AUFBRINGEN EINER SCHUTZLACKIERUNG**
PROTECTIVE LACQUER WITH ANTI-ADHESIVE EFFECT AND METHOD FOR APPLYING A PROTECTIVE LACQUER
VERNIS DE PROTECTION À EFFET AUTOCOLLANT ET PROCÉDÉ D'APPLICATION D'UN VERNIS DE PROTECTION

(30) Priorität: 30.03.2015 DE 102015104898; 30.04.2015 DE 102015106819
(43) Veröffentlichungstag der Anmeldung: 05.10.2016
(60) Teilanmeldung: 18167586.9
(73) Patentinhaber: Fritz Lange GmbH, 31832 Springe (DE)
(72) Erfinder: Ilgay, Vedat, 30880 Rethen (DE)
(74) Vertreter: Griepenstroh, Jörg

(56) Entgegenhaltungen:
- EP-A1- 1 107 218
- WO-A1-2014/106922
- DE-A1- 3 544 072
- DE-A1- 10 116 158
- DE-A1-102010 024 559

## Beschreibung

Die vorliegende Erfindung betrifft eine Schutzlackierung gemäß den Merkmalen im Oberbegriff von Patentanspruch 1.

Die vorliegende Erfindung betrifft weiterhin ein Verfahren zur Herstellung einer Schutzlackierung gemäß den Merkmalen im Oberbegriff von Patentanspruch 10.

Die vorliegende Erfindung betrifft weiterhin die Verwendung einer Schutzlackierung gemäß den Merkmalen im Oberbegriff von Patentanspruch 11.

Aus dem Stand der Technik ist es bekannt, Hinweisschilder aufzustellen. Eine der bekanntesten Formen sind Verkehrshinweisschilder, die im Bereich von Straßen angebracht werden, um so den Verkehrsteilnehmern Angaben über Richtungen, Verkehrsregelungen oder sonstige Informationen zu vermitteln.

Ein zweiter Anwendungsfall sind Hinweisschilder die Informationen vermitteln. Beispielsweise auf Wanderwegen, in Museen oder aber auch in Sportstadien, um über Regeln aufzuklären, Informationen zu vermitteln oder Passanten den Weg zu weisen.

Solche Hinweisschilder nachfolgend auch Schilder genannt sind im täglichen Betrieb Fremdeinflüssen ausgesetzt. Zum einen betrifft dies die Verwitterung und Verschmutzung aufgrund von Umwelteinflüssen, wie insbesondere Niederschlag, Staubentwicklung sowie Smog. Zum anderen sind jedoch die Hinweisschilder der Fremdeinwirkung durch Dritte, insbesondere in Form von Verschmutzungen durch Graffiti sowie durch unerwünschtes Ankleben von Aufklebern ausgesetzt. Die Reinigung solcher Schilder, insbesondere die Reinigung von Graffiti und das Entfernen von Aufklebern sind nur mit hohem Aufwand und damit verbunden hohen Kosten zu bewerkstelligen, sofern überhaupt eine Entfernung möglich ist ohne Beschädigung des Schildes und hier insbesondere der Anzeigenflächen des Schildes selber.

Beispielsweise ist aus der DE 101 16 158 A1 ein Anzeigenschild bekannt, bei dem die Anzeigenseite mit einer Antihaftbeschichtung aus Kunststoffmaterial überzogen ist. Diese Antihaftschicht verhindert ein Anhaften von Schnee, Schmutz, Wasser und dergleichen, so dass die Gefahr vermieden wird, dass die Anzeigeninformationen durch solche Einwirkungen nicht mehr erkennbar sind. Ferner ist durch die Firma 3M® ein Premium Protected Overlay Film Serie 1160 bekannt, welcher in Verbindung mit einem, ebenfalls hergestellt von 3M® Graffiti-Farbenferner, ein leichtes Entfernen nach Auftragen mit einer Einwirkzeit von 1 bis 5 Min. von Stickern und Graffitis ermöglicht.

Aus der WO 2014/106 922 A1 und der daraus resultierenden EP 2 942 380 A1, sowie der DE 10 2010 024 559 A sind Beschichtungen bekannt, die Partikel aufweisen, um einen hydrophoben Effekt zu erreichen und damit eine wasserabweisende Oberfläche bereitzustellen.

Ferner sind aus der DE 35 44 072 A1, der EP 1 107 218 A1, sowie der DE 101 16 158 A Anzeigeschilder GW. Anzeigen bekannt.

EP-A-3076581, mit dem gleichen Prioritätsdatum vom 05.11.2015, offenbart ein Hinweisschild mit Antiklebefolie und deren Verfahren zur Herstellung. Aufgabe der vorliegenden Erfindung ist es daher eine Möglichkeit aufzuzeigen, Objekte oder Gegenstände, insbesondere Hinweisschilder dahingehend zu schützen, dass insbesondere das Anhaften von Aufklebern erschwert wird sowie das generelle Reinigen erleichtert wird.

Die zuvor genannte Aufgabe wird mit der erfindungsgemäßen Schutzlackierung mit den Merkmalen im Patentanspruch 1 gelöst.

Der verfahrenstechnische Teil der Aufgabe wird weiterhin mit dem Verfahren zur Herstellung der Schutzlackierung mit den Merkmalen im Patentanspruch 10 gelöst.

Ferner betrifft die Erfindung die Verwendung der Schutzlackierung auf einem Hinweisschild gemäß den Merkmalen im Patentanspruch 11.

Vorteilhafte Ausgestaltungsvarianten der vorliegenden Erfindung sind in den abhängigen Patentansprüchen beschrieben.

Die vorliegende Erfindung eignet sich für ein Hinweisschild und wird auf dieses aufgetragen, wobei die Schutzlackierung als transparente außenseitige Oberflächenlackierung aufgebracht ist. Sie zeichnet sich erfindungsgemäß dadurch aus, dass die Schutzlackierung eine Oberfläche mit unregelmäßig verteilten punktförmigen Erhebungen aufweist, wobei die Erhebungen durch in der Schutzlackierung angeordnete Partikel ausgebildet sind.

Hierdurch wird eine nicht glatte bzw. nicht ebene Oberseite erreicht, so dass das Aufkleben von Stickern oder Aufklebern nur zur punktuellen Anlage, insbesondere auf den Erhebungen kommt. In der Folge lassen sich die Aufkleber oder Sticker leichter ablösen. Das Ablösen erfolgt durch einfache mechanische Reinigung, beispielsweise mit einem Besen oder Fingernagel bzw. der Aufkleber fällt von selbst ab. Eine abrasive Reinigung oder eine stark angreifende chemische Reinigung kann entfallen.

Dadurch dass die Schutzlackierung transparent, insbesondere durchsichtig ausgebildet ist und die Partikel durch ebenfalls transparente, insbesondere durchsichtige Partikel bevorzugt in Form von kugelförmigen Perlen ausgebildet ist, wird die Oberfläche des Gegenstandes oder Objektes in zu vernachlässigender Weise optisch, was insbesondere die Licht- und Sichtdurchlässigkeit betrifft, beeinträchtigt.

In der Folge ist es möglich jegliche flächigen bzw. ebenen und insbesondere großflächigen Oberflächen mit der erfindungsgemäßen Schutzlackierung zu versehen und in der Folge auf diese aufgeklebte Aufkleber leicht abzulösen. Es können somit Schilder, Hinweisschilder, Warnschilder und Verkehrsschilder mit der erfindungsgemäßen Schutzlackierung versehen werden. Besonders bevorzugt weist die Schutzlackierung darüber hinaus eine stoffabweisende Oberfläche bzw. Oberflächengüte, insbesondere eine Oberfläche mit Lotuseffekt auf. Hierdurch wird sichergestellt, dass Farben oder Graffitis von dieser leicht abgelöst werden. Auch tritt eine Art Selbstreinigungsfunktion ein, da Verschmutzungen in Form von Staubpartikeln oder sonstigen Unreinheiten gegebenenfalls durch Wind oder Regen bzw. einfache Reinigung, beispielsweise mit Wasser leicht zu entfernen sind. Dies wird dadurch erreicht, dass die Oberfläche zwar die punktförmigen Erhebungen hat die über die Oberfläche überstehen, jedoch die Oberfläche selbst wiederum eine nur geringe Rauheit bzw. Rautiefe besitzt und insbesondere keine Poren oder ähnliches aufweist. Die Oberfläche selbst ist somit bis auf die gegenüber der Oberfläche überstehende Erhebung, insbesondere glatt.

Als Lack zum Aufbringen der Schutzlackierung wird insbesondere ein einkomponentiger oder mehrkomponentiger Lack verwendet. Die Schutzlackierung kann insbesondere auch einschichtig oder mehrschichtig auf den Untergrund aufgebracht sein. Beispielsweise ist bei einer einschichtigen Lackierung dann direkt die eine Lackierschicht mit den Partikeln versehen. Bei einer mehrschichtigen Lackierung kann zunächst ein Haftgrund oder Primer aufbracht werden, ohne Partikel, wobei im Anschluss dann eine Lackierung mit der abschließenden Oberflächenschicht mit Partikeln erfolgt. Beispielsweise können Verdünner oder Härter eingebracht werden, je nachdem welcher Anwendungsfall lackiert werden soll. Beispielsweise kann eine höhere Fließfähigkeit des Lackes gefordert sein oder auch nicht, so dass entsprechend dies ausgewählt wird.

Die Partikel selbst sind besonders bevorzugt in Form von transparenten, insbesondere durchsichtigen kugelförmigen Perlen eingebracht, was insbesondere durch Glasperlen und/oder auch Kunststoffperlen mithin das Vorsehen von mechanischen in dem Lack vorliegenden Partikeln erfüllt wird. Damit diese während des Lackiervorgangs beispielsweise nicht in den auf dem Untergrund des Gegenstandes oder Objektes aufliegenden jedoch immer noch flüssigen Lack einsinken bzw. versinken liegen insbesondere die Partikel auf einem Lackieruntergrund mithin dem Untergrund auf.

Somit wird sichergestellt, dass die Partikel durch mechanische Anlage an dem Lackieruntergrund, welcher die Außenoberfläche des zu lackierenden Gegenstands und/oder Objektes darstellt, bzw. bei einem unbeschichteten Lack, die jeweils untere Lackschicht mechanisch aufliegt und somit nicht in die noch flüssige Lackschicht einsickern können. Dadurch stehen die Partikel mit ihrer auf dem Lackieruntergrund gegenüberliegenden Seite gegenüber der Oberfläche der Schutzlackierung über und sorgen somit für die punktförmigen Erhebungen.

Je nach angewendetem Lackierverfahren und/oder verwendetem Lack ist es möglich, dass die Partikel selbst an ihrer Seite der Erhebung mit dem Lack benetzt sind, was insbesondere aufgrund eines Oberflächenkapillareffektes erreicht wird. Gerade hierdurch ergibt sich die Möglichkeit, dass eine kaum merkbare optische Unterbrechung aufgrund der gegenüber der Oberfläche der Lackierung überstehenden Erhebungen erfolgt, da keine optische Bruchkante am Übergang Lackierung zu Partikel in der Oberfläche erfolgt, sondern die Lackierung sich auch über den Partikel fortsetzt.

Hierdurch wird es ermöglicht, dass die Lackierung gerade auch auf Hinweisschilder und insbesondere Verkehrsschilder aufgebracht werden kann. Ferner ist die Lackierung derart gewählt, dass sie auf eine Anzeige bzw. eine Folie eines Verkehrsschildes aufgebracht werden kann, welche auch insbesondere eine retroreflektierende Folie sein kann. Insbesondere wird eine retroreflektierende Folie vom Typ RA1 oder RA2 nach DIN 67-520 verwendet, die mit der erfindungsgemäßen Schutzlackierung überzogen wird.

Im Falle der Verwendung einer RA1 Folie weist diese bevorzugt im Rahmen der Erfindung die in der nachfolgenden Tabelle für die jeweiligen Farben angegebenen Mindestrückstrahlwerte auf.

| RA 1 Mindestrückstrahlwert [cd/(lx*m²)] | | | | | | | |
|---|---|---|---|---|---|---|---|
| Beobachtungswinkel α [°] | Anleuchtwinkel β [°] | Weiß | Gelb | Orange | Rot | Grün | Blau |
| 0,2 | 5 | 91 | 65 | 32,5 | 18,85 | 11,7 | 5,2 |
| 0,2 | 30 | 39 | 28,6 | 13 | 7,8 | 4,55 | 2,21 |
| 0,2 | 40 | 13 | 9,1 | 2,86 | 2,6 | 1,95 | 0,65 |
| 0,33 | 5 | 65 | 45,5 | 26 | 13 | 9,1 | 2,6 |
| 0,33 | 30 | 31,2 | 20,8 | 10,4 | 5,2 | 3,9 | 1,3 |
| 0,33 | 40 | 11,7 | 7,8 | 2,86 | 2,34 | 1,56 | 0,13 |
| 2,0 | 5 | 6,5 | 3,9 | 1,56 | 1,3 | 0,65 | 0,13 |
| 2,0 | 30 | 3,25 | 1,95 | 0,65 | 0,65 | 0,39 | 0,13 |
| 2,0 | 40 | 1,95 | 1,3 | 0,39 | 0,65 | 0,26 | 0,13 |

Im Falle der Verwendung einer RA2 Folie weist diese bevorzugt die in der nachfolgenden Tabelle dargestellen Mindestrückstrahlwerte für die angegebenen Farben auf.

| RA 2 Mindestrückstrahlwert [cd/(lx*m²)] | | | | | | | |
|---|---|---|---|---|---|---|---|
| Beobachtungswinkel α [°] | Anleuchtwinkel β [°] | Weiß | Gelb | Orange | Rot | Grün | Blau |
| 0,2 | 5 | 350 | 238 | 140 | 63 | 63 | 28 |
| 0,2 | 30 | 210 | 140 | 84 | 35 | 35 | 15,4 |
| 0,2 | 40 | 154 | 98 | 40,6 | 21 | 16,8 | 11,2 |
| 0,33 | 5 | 252 | 168 | 91 | 35 | 29,4 | 19,6 |
| 0,33 | 30 | 140 | 98 | 56 | 19,6 | 16,8 | 11,2 |
| 0,33 | 40 | 133 | 84 | 28 | 18,2 | 15,4 | 9,8 |
| 2,0 | 5 | 7 | 4,2 | 2,1 | 1,4 | 0,7 | 0,28 |
| 2,0 | 30 | 3,5 | 2,1 | 1,4 | 0,56 | 0,42 | 0,14 |
| 2,0 | 40 | 2,1 | 1,4 | 0,42 | 0,42 | 0,28 | 0,14 |

Besonders bevorzugt weisen weiterhin die Partikel einen Partikeldurchmesser von 10 µm bis 200 µm, insbesondere von 20 µm bis 100 µm und bevorzugt von 45 µm bis 90 µm auf. Der Lack selber weist dazu eine Lackschichtdicke auf, welche kleiner ist als der Partikeldurchmesser selber. Insbesondere ist die Lackschichtdicke 5% bis 30% bevorzugt 10% bis 20% kleiner gegenüber dem Partikeldurchmesser. Hierdurch wird sichergestellt, dass dann die Partikel auf dem Lackieruntergrund aufliegen, gleichzeitig jedoch Erhebungen an der Oberfläche der Schutzlackierung hervorrufen. Durch das angegebene Größenverhältnis wird insbesondere sichergestellt, dass beispielsweise auch die an der Oberfläche liegenden Erhebungsseiten der Partikel von dem Lack selbst benetzt werden, mithin die Partikel nicht zu weit aus dem Lack herausragen. Die Erhebungen selbst stehen dann bevorzugt mit einer Höhe von 1 µm bis 200 µm, insbesondere größer 101 µm gegenüber der Lackschichtoberfläche über.

Die Erhebungen selbst weisen an ihrer Oberfläche eine abgerundete Spitze auf bzw. sind dort kugelig ausgebildet. Die Partikel selbst können eine voneinander verschiedene Größe aufweisen, jedoch auch eine gleichmäßige Größe. Die oben genannten Partikeldurchmesser sind im Falle von verschiedenen Durchmessern der Partikel ein Mittelwert der Charge.

Die Schutzlackierung kann insbesondere durch das nachfolgend beschriebene Verfahren aufgebracht werden, welches folgende Verfahrensschritte aufweist:
- Bereitstellen eines Lackes, welcher entweder mit Partikeln vorgefertigt ist, oder in den Partikel eingebracht werden,
- Auftragen des Lackes auf einen Verkehrsschild oder einer Werbetafel ,
- Wobei das Aufbringen mittels Siebruckverfahren oder pneumatischem Lackierverfahren oder mechanischem Lackierverfahren erfolgt.

Zunächst wird der Lack bereitgestellt in einkomponentiger oder mehrkomponentiger Variante. Mehrkomponentig bedeutet in diesem Zusammenhang, dass eine Grundfarbe vorgesehen ist, welche dann mit einem Härter und/oder Verdünner vermengt werden kann. Zusätzlich sind dann die Partikel entweder bereits in der Lack enthalten oder werden dem Lack zugemischt. Der Lack wird anschließend auf einen Untergrund mithin auf den Gegenstand oder das Objekt aufgebracht. Bei einschichtigem Lackieren ist die Oberfläche des Gegenstandes gleich der Lackieruntergrund. Bei mehrschichtigem Auftragen ist die jeweils letzte aufgetragene Lackschicht gleich der Lackieruntergrund. Bevorzugt ist der Volumenprozentanteil in der Lackschicht zwischen 50 bis 60 Volumen-% Lackanteil und 40 bis 50 Volumen-% Partikelanteil. Der Lack selbst kann beispielsweise im Falle eines zweikomponentigen Lackes im Mischungsverhältnis 70 Teile Farbe, 10 Teile Härter und Verdünner angemischt werden. Als Verdünner werden insbesondere 10 bis 30% bezogen auf die Menge von Farbe und Härter verwendet, jedoch auch beispielsweise 70 Teile Farbe, 10 Teile Härter und 10 bis 20 Teile Verdünner verwendet werden. Dieser Mischung werden anschließend die Partikel zugemischt.

Das Aufbringen selbst kann gerade bei Schildern mit dem Siebdruckverfahren erfolgen. Ein Aufbringen ist jedoch auch insbesondere mit einem pneumatischen oder mechanischen Lackierverfahren möglich. Unter einem pneumatischen Lackierverfahren ist hier insbesondere das Aufsprühen mit einer Lackierpistole oder einer Farbdose zu verstehen. Unter einem mechanischen Lackierverfahren ist ein Aufbringungsverfahren, beispielsweise mit einer Farbrolle oder einem Pinsel oder einem sonstigen mechanischen Hilfsmittel zu verstehen. Es wäre im Rahmen der Erfindung beispielsweise auch gerade bei kleineren Objekten möglich diese in Form einer Tauchlackierung mit der erfindungsgemäßen Schutzlackierung zu versehen. Gerade beim Siebdruckverfahren oder aber auch beim pneumatischen Lackierverfahren ist eine entsprechende Öffnungsgröße der Lackierdüse bzw. Maschenweite vorzusehen, welche die in der Farbe vorhandenen Partikel durchlässt. Auch wäre zum Aufbringen ein Drucken möglich.

Im Rahmen der Erfindung wäre es auch vorstellbar, dass zunächst die Lackierung aufgebracht wird und anschließend die Partikel in die Lackierung eingestreut werden oder aber pneumatisch nach Art eines Kugelstrahlens in die Oberfläche eingebracht werden, was insbesondere bei vertikal orientierten Oberflächen bevorzugt ist.

Eine entsprechende chemische oder zumindest mechanische Reinigung vor dem Lackieren zur Anhaftung des Lackes ist im Rahmen der Erfindung vorstellbar. Erfindungsgemäß ist insbesondere die Licht- und Sichtdurchlässigkeit durch die Schutzlackierung nicht beeinflusst, so dass gerade auch Verkehrsschilder mit retroreflektierender Oberfläche mit der erfindungsgemäßen Schutzlackierung versehen werden können und/oder mit dieser nachgerüstet werden können. Insbesondere das Aufbringen mit pneumatischen oder mechanischen Lackierverfahren ermöglicht gerade eine Nachrüstung bei vorhandenen Objekten oder Gegenständen beispielsweise an bereits aufgestellten Bushaltestellen, U-Bahnstationen oder auch an bereits aufgestellten Verkehrsschildern.

Im Rahmen der Erfindung ist es jedoch auch möglich dass die Antihaftbeschichtung in Form eines Lackes bzw. einer Lackierung auf einen Untergrund aufgebracht ist. Hierzu wird eine Oberfläche des Untergrundes mit einer Lackschicht versehen, wobei die Lackschicht selbst Erhebungen aufweist, wie sie vorbeschrieben bei der Antihaftbeschichtung in Form der Folie ausgebildet sind. Somit sind gegenüber einer Lackoberfläche der Lackschicht überstehend Erhebungen ausgebildet, die unregelmäßig auf der Lackschicht angeordnet sind. Auch hier ist es dann nach Aufbringen der Lackschicht möglich auf diese aufgeklebte Aufkleber besonders einfach mechanisch zu entfernen bzw. zu lösen, sofern der Aufkleber nicht bereits von selbst abfällt.

Die Lackschicht wird dabei insbesondere einlagig bzw. einschichtig aufgebracht. Es ist jedoch auch möglich eine zweischichtige oder mehrschichtige Lackschicht aufzubringen, so dass beispielsweise zunächst eine Grundschicht aufgebracht wird auf die und/oder in die dann Pigmente eingebracht werden zur Ausbildung der Erhebungen. Bevorzugt sind in diesem Fall Pigmente und Lackschicht aus dem gleichen Werkstoff ausgebildet, so dass sie nach Aushärten eine einstückige und werkstoffeinheitliche Verbindung eingehen. Auch ist es möglich zunächst eine Lackschicht aufzubringen, die die Erhebungen aufweist und diese nochmals mit einer Oberfläche bzw. Schutzschicht zu versehen, so dass zum einen eine hohe Transparenz und damit verbunden Licht- und Sichtdurchlässigkeit gegeben ist, zum anderen die Schutzschicht eine besonders glatte Oberflächengüte bereitstellt, welche auch die Erhebungen überdeckt, so dass insbesondere ein Farbauftrag beispielsweise durch Graffiti leicht entfernbar ist.

Der Lack selbst ist dabei einkomponentig, kann jedoch auch zweikomponentig ausgebildet sein. Vor dem Aufbringen des Lackes wird insbesondere die Oberfläche gereinigt, ganz besonders bevorzugt chemisch gereinigt. Es ist jedoch auch möglich, dass die Oberfläche mit einem Primer oder einer sonstigen Vorbehandlung zum besonders guten Anhaften des Lackes vorbehandelt wird.

Das Aufbringen des Lackes erfolgt insbesondere mechanisch mit einer Lackierrolle, so dass die Lackierrolle Vorrichtungen aufweist, um die Erhebungen bereitzustellen. Auch ist es möglich den Lack mit einem Sprühsystem aufzubringen, wobei hier bevorzugt ein derartig grobes Aufsprühen erfolgt, so dass die Erhebungen mit ausgebildet werden. Auch kein ein zweischichtiges Auftragen erfolgt, dass zunächst eine Grundlackierung durchgeführt wird und im Anschluss daran nochmals ein Teil des Lackiervorgangs vorgenommen wird, so dass die Erhebungen ausgebildet werden. Auch ist es vorstellbar mittels einer Schablone, beispielsweise in Form einer Lochmaske den Lack aufzubringen, so dass die Erhebungen ausgebildet werden.

Insbesondere weist der Lack eine derartige chemische Zusammensetzung auf, dass er sich mit handelsüblichen Retroreflektionsfolien derart verbindet, dass die Licht- und Sichtdurchlässigkeit nicht beeinträchtigt wird. Insbesondere bei Schildern, die eine Siebdruckoberfläche aufweisen, werden die Siebdrucklacke und/oder Farben durch den Lack selbst nicht angegriffen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1a und: b eine erfindungsgemäße Draufsicht auf eine Schutzlackierung,
- Figur 2: eine Querschnittsansicht durch eine auf einem Untergrund aufgebrachte Schutzlackierung,
- Figur 3: eine Querschnittsansicht durch eine Mehrschichtlackierung,
- Figur 4: eine Detailansicht durch eine Schutzlackierung mit Erhebung und benetztem Partikel,
- Figur 5: ein Verkehrsschild,
- Figur 6: das Verkehrsschild mit Schutzlackierung in Querschnittsansicht.

In den Figuren werden für gleiche oder ähnliche Bauteile dieselben Bezugszeichen verwendet, auch wenn eine wiederholte Beschreibung aus Vereinfachungsgründen entfällt.

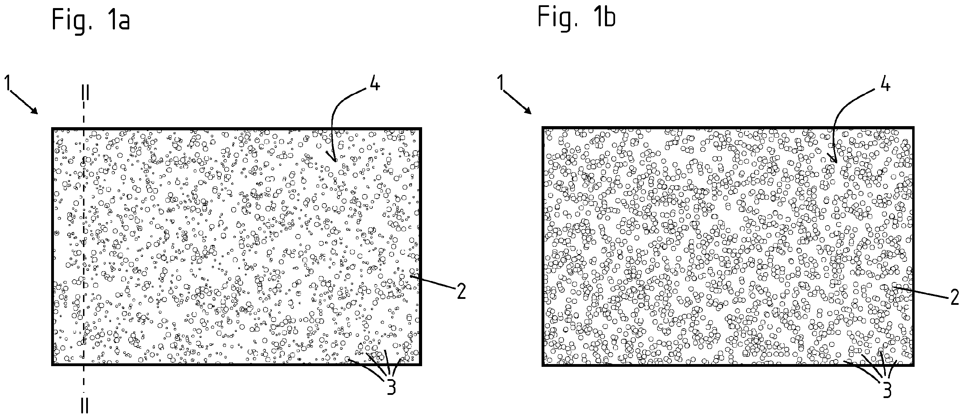

Figuren 1a und b zeigen jeweils eine erfindungsgemäße Schutzlackierung 1 zur Ausbildung einer Antihaftbeschichtung. Bei Figur 1a weisen die Erhebungen 3 voneinander verschiedene Durchmesser auf. Bei Figur 1b weiten alle Erhebungen 3 den gleichen Durchmesser auf, wobei Produktionsabweichungen hiervon unberührt sind. Die Erhebungen 3 sind jeweils unregelmäßig in der Lackschicht 2 verteilt angeordnet.

Die Schutzlackierung 1 weist dazu eine Oberfläche 4 auf, wobei gegenüber der Oberfläche 4 eine Vielzahl von punktförmigen Erhebungen 3 überstehen bzw. abstehen. Die Erhebungen 3 sind dabei unregelmäßig verteilt bzw. stochastisch verteilt in der Lackschicht 2 gemäß Figur 1a und b angeordnet.

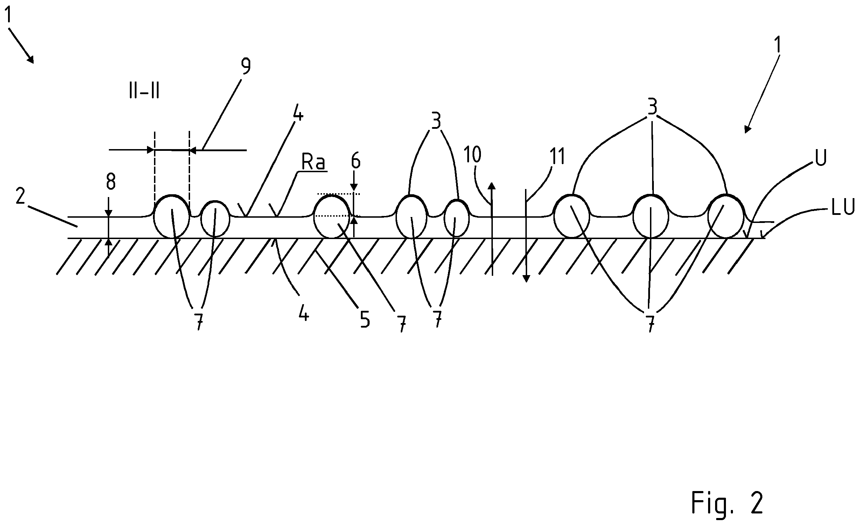

Figur 2 zeigt eine Querschnittsansicht gemäß Schnittlinie II-II aus Figur 1. Gut zu erkennen ist, dass die Lackschicht 2 der Schutzlackierung 1 selbst auf dem Untergrund U eines Gegenstandes 5 aufgebracht ist. Der Untergrund U stellt gleichzeitig auch den Lackieruntergrund LU dar. Die Lackschicht 2 selbst weist die Oberfläche 4 auf, wobei gegenüber der Oberfläche 4 die Erhebung 3 mit einer Höhe 6 überstehend ausgebildet sind. Die Höhe 6 kann gleich ausgebildet sein oder auch verschieden hoch ausgebildet sein. Damit dies geschieht sind Partikel 7 in der Lackschicht 2 angeordnet, wobei die Partikel 7 einen Partikeldurchmesser 9 haben. Die Partikel 7 sind bevorzugt rund und/oder elliptisch bzw. eiförmig ausgebildet. Die Partikel 7 können dabei gleich groß oder aber voneinander verschieden sein. In besonders bevorzugter Ausgestaltungsvariante der Erfindung ist der Partikeldurchmesser 9 jedoch immer so gewählt, dass dieser größer der Lackschichtdicke 8 der Lackschicht 2 ist. Dies bedeutet gleichsam, dass die Lackschichtdicke 8 der Lackschicht 2 kleiner dem Partikeldurchmesser 9 ist. Bei voneinander verschiedenen Partikeldurchmessern 9 ist die Lackschichtdicke 8 bevorzugt derart gewählt, dass diese kleiner dem kleinsten Partikeldurchmesser 9, zumindest aber kleiner einem mittleren Partikeldurchmesser 9 der voneinander verschiedenen Partikeldurchmesser 9 ausgebildet ist. Somit wird sichergestellt, dass die Partikel 7 auf dem jeweiligen Lackieruntergrund LU aufliegen und somit mit der Höhe 6 gegenüber der Oberfläche 4 überstehend ausgebildet sind. Die Oberfläche 4 der Lackschicht 2 kann auch als Oberseite bezeichnet werden.

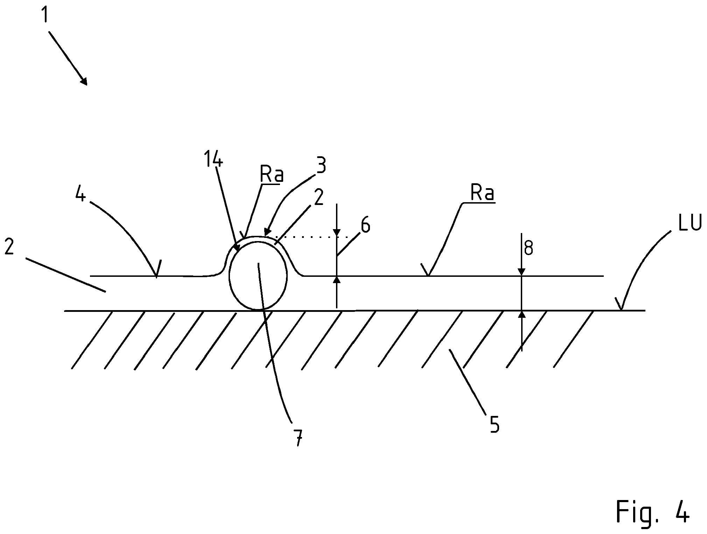

Gleichzeitig zu sehen ist, dass die Lichtdurchlässigkeit sowohl für einfallendes Licht 11 als auch für ausfallendes Licht 10 nicht oder nur unwesentlich beeinflusst ist, so dass insbesondere der Gegenstand 5, als retroreflektierende Folie eines Verkehrsschildes ausgebildet sein kann, dessen optische Erhebung bzw. Sichtweise nicht beeinflusst wird. Ferner ist die Rautiefe Ra der Oberfläche 4 selbst gezeigt. Die Rautiefe ist insbesondere derart ausgebildet das sich eine besonders glatte Oberfläche ergibt, so dass ein leichtes Reinigen und insbesondere Entfernen von Lackierungen oder Farben bzw. Graffiti ermöglicht wird. Gemäß Figur 4 ist noch einmal gezeigt, dass diese glatte Oberflächenbeschaffenheit auch auf der Erhebung 3 selbst im Falle einer Benetzung mit dem Lack vorhanden ist.

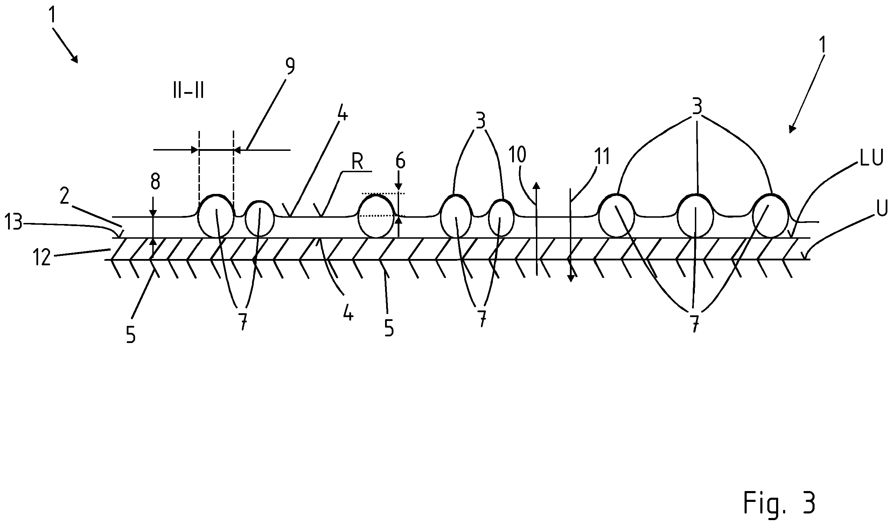

Figur 3 zeigt den Aufbau einer Schutzlackierung als Mehrschichtlackierung. _Hier ist auf den Gegenstand 5 eine erste Lackschicht 2 in Form einer Untergrundlackierung bzw. eines Primers oder Haftgrundes aufgebracht. Die Untergrundlackierung 12 ist somit auf dem Untergrund U des Gegenstandes 5 aufgebracht. Die Lackoberfläche 13 der Untergrundlackierung 12 bildet somit gleichzeitig den Lackieruntergrund LU zum Aufliegen der Partikel 7 der Lackschicht 2.

Figur 4 zeigt eine Detailansicht durch eine Erhebung 3. Gut zu erkennen ist, dass die Erhebung 3 mit der Höhe 6 gegenüber der Oberfläche der Lackschicht 2 überstehend ausgebildet ist. Der Partikel 7 liegt dabei auf dem Lackieruntergrund LU auf. Die Oberseite des Partikels 7 ist dabei durchgängig von der Lackschicht 2 benetzt, so dass keine optische Bruchkante am Übergang von Lackschicht 2 zu Partikel 7 erfolgt. Der Partikel aber auch die Lackschicht 2 selbst sind transparent bzw. durchsichtig. Die Höhe 6 setzt sich daher aus dem Herausragen des Partikels 7 gegenüber der Oberfläche 4 zusammen mit der Dicke der Benetzung. Auch auf der Erhebung 3 ist die Rautiefe Ra vorhanden.

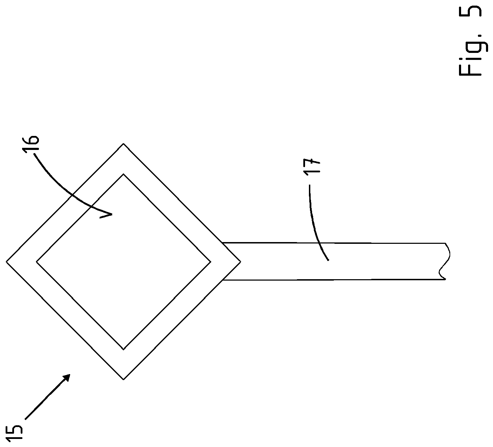

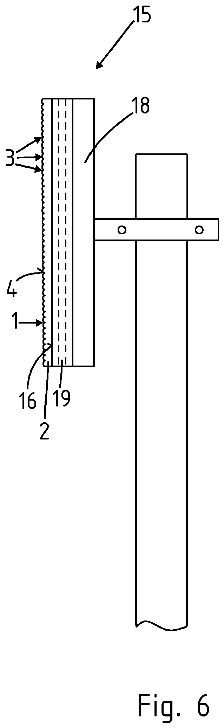

Figur 5 zeigt ein erfindungsgemäßes Verkehrsschild 15 dessen Anzeige 16 bzw. Anzeigenseite zum Betrachter hin dargestellt ist. Das Verkehrsschild 15 ist bereits an einem Mast 17 montiert. Die Anzeige bzw. Anzeigenseite 16 ist erfindungsgemäß mit der Schutzlackierung 1 versehen. Dies ist dargestellt in Querschnittsansicht gemäß Figur 6. Das Anzeigenschild selber weist eine flächige Schildtafel 18 auf, die beispielsweise aus einem metallischen Werkstoff ausgebildet ist. Auf die flächige Schildtafel 18 ist eine mehrschichtige retroreflektierende Anzeigenfolie 19 aufgebracht, wobei auf die Anzeigenfolie die Schutzlackierung 1 mit der Lackschicht 2 sowie den Erhebungen 3 aufgebracht ist. Dies kann im Falle des noch nicht montierten Verkehrsschildes 15 im Siebdruckverfahren geschehen. Bei einem bereits montierten Verkehrsschild 15 kann dies jedoch auch durch ein nachträgliches Lackieren am Aufstellungsort des Verkehrsschildes 15 erfolgen.

### Bezugszeichen:

- 1 -: Schutzlackierung
- 2 -: Lackschicht
- 3 -: Erhebung
- 4 -: Oberfläche zu 1
- 5 -: Gegenstand
- 6 -: Höhe
- 7 -: Partikel
- 8 -: Lackschichtdicke zu 2
- 9 -: Partikeldurchmesser
- 10 -: ausfallendes Licht
- 11 -: einfallendes Licht
- 12 -: Untergrundlackierung
- 13 -: Lackoberfläche
- 14 -: Oberseite zu 7
- 15 -: Verkehrsschild
- 16 -: Anzeige
- 17 -: Mast
- 18 -: Schildtafel
- 19 -: retroreflektierende Anzeigenfolie

- U -: Untergrund
- LU -: Lackieruntergrund
- Ra -: Rautiefe

## Patentansprüche

1. Schutzlackierung (1) für ein Hinweisschild, wobei die Schutzlackierung (1) als transparente außenseitige Oberflächenlackierung aufgebracht ist und die Schutzlackierung (1) eine Oberfläche (4) mit unregelmäßig verteilten punktförmigen Erhebungen (3) aufweist, wobei die Erhebungen (3) durch in einer Lackschicht (2) der Schutzlackierung (1) angeordnete Partikel (7) ausgebildet sind, **dadurch gekennzeichnet, dass** die Schutzlackierung als abschließende Oberflächenlackierung auf einem Verkehrsschild (15) oder einer Werbetafel aufgebracht ist.

2. Schutzlackierung nach Anspruch 1, **dadurch gekennzeichnet, dass** ein einkomponentiger oder mehrkomponentiger Lack verwendet ist und dass die Schutzlackierung (1) einschichtig oder mehrschichtig aufgebracht ist.

3. Schutzlackierung nach einem der Ansprüche 1 oder 2, **dadurch gekennzeichnet, dass** die Partikel (7) als transparente kugelförmige Perlen in den Lack eingebracht sind.

4. Schutzlackierung nach einem der Ansprüche 1 bis 4, **dadurch gekennzeichnet, dass** die Partikel (7) einen Partikeldurchmesser (9) von 10 bis 200 µm aufweisen.

5. Schutzlackierung nach dem vorhergehenden Anspruch, **dadurch gekennzeichnet, dass** die Lackschicht (2) eine Lackschichtdicke (8) aufweist, die kleiner dem Partikeldurchmesser (9) ist.

6. Schutzlackierung nach einem der Ansprüche 1 bis 5, **dadurch gekennzeichnet, dass** die Partikel (7) auf einem Lackieruntergrund (LU) aufliegen.

7. Schutzlackierung nach Anspruch 5 oder 6, **dadurch gekennzeichnet, dass** die Erhebungen (3) mit einer Höhe (6) von 1µm bis 200µm gegenüber der Oberfläche (4) überstehen.

8. Schutzlackierung nach einem der Ansprüche 1 bis 7, **dadurch gekennzeichnet, dass** die Erhebungen (3) eine abgerundete Spitze aufweisen und/oder dass das Volumenverhältnis der Schutzlackierung (1) bei 50 bis 60 Volumen-% Lackanteil und 40 bis 50 Volumen-% Partikelanteil liegt.

9. Schutzlackierung nach einem der Ansprüche 1 bis 8, **dadurch gekennzeichnet, dass** diese eine stoffabweisende Oberfläche (4) mit geringer Rautiefe (Ra) aufweist, so dass Farben oder Graffitis leicht ablösbar sind.

10. Verfahren zur Herstellung einer Schutzlackierung nach Patentanspruch 1, **gekennzeichnet, durch** folgende Verfahrensschritte:
- Bereitstellen eines Lackes, welcher entweder mit Partikeln (7) vorgefertigt ist oder in den Partikel (7) eingebracht werden,
- Auftragen des Lackes auf ein Verkehrsschild (15) oder eine Werbetafel,
- wobei das Aufbringen mittels Siebdruckverfahren oder pneumatischem Lackierverfahren oder mechanischem Lackierverfahren erfolgt.

11. Verwendung einer Schutzlackierung nach Patentanspruch 1 auf einem Hinweisschild, **dadurch gekennzeichnet, dass** die Schutzlackierung (1) auf eine Anzeige (16) des Hinweisschildes aufgebracht ist.

12. Verwendung nach dem vorhergehenden Anspruch, **dadurch gekennzeichnet, dass** die Anzeige (16) eine Folie ist.

## Claims

1. Protective lacquer (1) for an advisory display board, wherein the protective lacquer (1) is applied as a transparent external surface lacquering and the protective lacquer (1) has a surface (4) with irregularly distributed punctual elevations (3), wherein the elevations (3) are formed by particles (7) disposed in a lacquer layer (2) of the protective lacquer (1), **characterised in that** the protective lacquer is applied as a final surface lacquering on a traffic sign (15) or an advertising board.

2. Protective lacquer according to claim 1, **characterised in that** a single component or multiple component lacquer is used and that the protective lacquer (1) is applied in a single layer or in multiple layers.

3. Protective lacquer according to one of claims 1 or 2, **characterised in that** the particles (7) are incorporated into the lacquer as transparent ball-shaped pearls.

4. Protective lacquer according to one of claims 1 to 4, **characterised in that** the particles (7) have a particle diameter (9) of 10 to 200µm.

5. Protective lacquer according to the preceding claim, **characterised in that** the lacquer layer (2) has a lacquer layer thickness (8) which is smaller than the particle diameter (9).

6. Protective lacquer according to one of claims 1 to 5, **characterised in that** the particles (7) lie on a lacquer substrate (LU).

7. Protective lacquer according to claim 5 or 6, **characterised in that** the elevations (3) protrude from the surface (4) by a height (6) of 1µm to 200µm.

8. Protective lacquer according to one of claims 1 to 7, **characterised in that** the elevations (3) have a rounded tip and/or that the volume relationship of the protective lacquer (1) lies at 50-60% by volume lacquer and 40-50% by volume particles.

9. Protective lacquer according to one of claims 1 to 8, **characterised in that** said protective lacquer has a substance-repellent surface (4) with small depth of roughness (Ra), so that paint or graffiti can be easily removed.

10. Method for manufacturing a protective lacquer according to claim 1, **characterised by** following method steps:
- provision of a lacquer which is either prefabricated with particles (7) or into which particles (7) are incorporated,
- application of the lacquer onto a traffic sign (15) or an advertising board,
- wherein the application takes place by means of a screen printing method or a pneumatic coating method or a mechanical coating method.

11. Use of a protective lacquer according to claim 1 on an advisory display board, **characterised in that** the protective lacquer (1) is applied on a display (16) of the advisory display board.

12. Use according to the preceding claim, **characterised in that** the display (16) is a film.

## Revendications

1. Vernis de protection (1) pour un panneau de signalisation, dans lequel le vernis de protection (1) est appliqué comme vernis de surface transparent côté extérieur et le vernis de protection (1) comporte une surface (4) avec des bosses (3) ponctuelles irrégulièrement réparties, dans lequel les bosses (3) sont formées par des particules (7) agencées dans une couche de vernis (2) du vernis de protection (1), **caractérisé en ce que** le vernis de protection est appliqué comme vernis de surface final sur un panneau de signalisation routière (15) ou sur un panneau publicitaire.

2. Vernis de protection selon la revendication 1, **caractérisé en ce qu'**un vernis à un composant ou un vernis à plusieurs composants est utilisé et **en ce que** le vernis de protection (1) est appliqué en une couche ou en plusieurs couches.

3. Vernis de protection selon l'une des revendications 1 ou 2, **caractérisé en ce que** les particules (7) sont introduites dans le vernis sous forme de perles sphériques transparentes.

4. Vernis de protection selon l'une des revendications 1 à 4, **caractérisé en ce que** les particules (7) ont un diamètre de particules (9) de 10 à 200 µm.

5. Vernis de protection selon la revendication précédente, **caractérisé en ce que** la couche de vernis (2) a une épaisseur de couche de vernis (8) qui est inférieure au diamètre de particules (9).

6. Vernis de protection selon l'une des revendications 1 à 5, **caractérisé en ce que** les particules (7) reposent sur un substrat de vernis (LU).

7. Vernis de protection selon la revendication 5 ou 6, **caractérisé en ce que** les bosses (3) dépassent d'une hauteur (6) de 1 µm à 200 µm de la surface (4).

8. Vernis de protection selon l'une des revendications 1 à 7, **caractérisé en ce que** les bosses (3) ont un sommet arrondi et/ou **en ce que** le rapport de volume du vernis de protection (1) est de 50 à 60 % en volume de vernis et de 40 à 50 % en volume de particules.

9. Vernis de protection selon l'une des revendications 1 à 8, **caractérisé en ce qu'**il présente une surface répulsive (4) présentant une petite rugosité (Ra) de sorte que des peintures ou des graffitis peuvent être facilement enlevés.

10. Procédé de fabrication d'un vernis de protection selon la revendication 1, **caractérisé par** les étapes de procédé suivantes :
- préparation d'un vernis soit qui est préfabriqué avec des particules (7) soit dans lequel des particules (7) sont introduites,
- application du vernis sur un panneau de signalisation routière (15) ou sur un panneau publicitaire,
- dans lequel l'application s'effectue au moyen d'un procédé de sérigraphie ou un procédé de vernissage au pistolet pneumatique ou un procédé de vernissage mécanique.

11. Utilisation d'un vernis de protection selon la revendication 1 sur un panneau de signalisation, **caractérisée en ce que** le vernis de protection (1) est appliqué sur un affichage (16) du panneau de signalisation.

12. Utilisation selon la revendication précédente, **caractérisée en ce que** l'affichage (16) est une feuille.
